# FASCICULE DE BREVET EUROPEEN

(11) **EP 4 301 635 B1**
(45) Date de publication et mention de la délivrance du brevet: **28.01.2026**
(21) Numéro de dépôt: 22712291.8
(22) Date de dépôt: 23.02.2022
(51) Int. Cl.: B60R 25/25, G06V 40/50, G06V 40/70

(54) **PROCÉDÉ D'IDENTIFICATION D'UN LOCUTEUR**
VERFAHREN ZUR IDENTIFIZIERUNG EINES SPRECHERS
METHOD FOR IDENTIFYING A SPEAKER

(30) Priorité: 01.03.2021 FR 2101974
(43) Date de publication de la demande: 10.01.2024
(73) Titulaire: Renault s.a.s, 92100 Boulogne Billancourt (FR)
(72) Inventeur: GUILLEMET, Patrick, 78084 Guyancourt cedex (FR); ROSSELLO, Norbert, 78084 Guyancourt cedex (FR)
(86) Numéro de dépôt international: PCT/EP2022/054487
(87) Numéro de publication internationale: WO 2022/184518

(56) Documents cités:
- ADAM WÓJTOWICZ ET AL: "Model for adaptable context-based biometric authentication for mobile devices", PERSONAL AND UBIQUITOUS COMPUTING, SPRINGER VERLAG, LONDON, GB, vol. 20, no. 2, 1 April 2016 (2016-04-01), pages 195 - 207, XP058081965, ISSN: 1617-4909, DOI: 10.1007/S00779-016-0905-0
- MANSOUR ABDELJEBAR ET AL: "A context-aware Multimodal Biometric Authentication for cloud-empowered systems", 2016 INTERNATIONAL CONFERENCE ON WIRELESS NETWORKS AND MOBILE COMMUNICATIONS (WINCOM), IEEE, 26 October 2016 (2016-10-26), pages 278 - 285, XP033018219, DOI: 10.1109/WINCOM.2016.7777227
- ROLI FABIO ET AL: "Template Co-update in Multimodal Biometric Systems", 27 August 2007, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 1194 -, ISBN: 978-3-642-17318-9, XP047467722

## Description

### DOMAINE TECHNIQUE DE L'INVENTION

La présente invention concerne de manière générale le domaine de l'identification de personnes sur la base de données biométriques.

Elle concerne plus particulièrement un procédé d'identification d'un occupant d'un véhicule automobile, comportant des étapes :
a) d'enregistrement d'au moins deux empreintes biométriques dudit occupant, lesdites deux empreintes biométriques étant de types différents,
b1) de première comparaison d'une première empreinte biométrique avec au moins une première empreinte de référence enregistrée dans une première base de données d'empreintes, et en fonction du résultat de la première comparaison, une étape b2) de deuxième comparaison d'une deuxième empreinte biométrique avec au moins une deuxième empreinte de référence enregistrée dans une deuxième base de données d'empreintes, et
c) d'identification dudit occupant en fonction du résultat de la comparaison de la première empreinte biométrique avec la première empreinte de référence et/ou de la deuxième empreinte biométrique avec la deuxième empreinte de référence,.

Elle concerne aussi un véhicule automobile comportant les moyens techniques nécessaires à la mise en œuvre de ce procédé.

### ETAT DE LA TECHNIQUE

Un axe de recherche actuel dans l'automobile consiste à permettre d'adapter automatiquement les différentes fonctions offertes par un véhicule à son utilisateur.

Dans ce contexte, il s'avère nécessaire de pouvoir identifier toute personne qui émet des commandes vocales, afin par exemple de régler le véhicule de façon adaptée ou de s'assurer que cette personne est autorisée ou non à utiliser des fonctions particulières du véhicule. A titre d'exemple, on souhaite pouvoir s'assurer que le passager qui commande l'ouverture totale de sa fenêtre est autorisé à le faire. On souhaite également pourvoir offrir des fonctions personnalisées aux passagers du véhicule (réglage automatique des sièges, réglages audio...).

La biométrie vocale, qui est une technologie d'identification par la voix, peut alors être utilisée. Elle s'appuie sur des algorithmes capables d'identifier des caractéristiques vocales spécifiques à chaque personne, afin de construire une empreinte vocale propre à chaque personne.

La biométrie faciale est une autre technologie d'identification (par traitement d'images du visage d'une personne) qui peut être utilisée. Elle s'appuie de la même façon sur des algorithmes capables d'identifier des caractéristiques spécifiques à chaque visage, afin de construire une empreinte faciale propre à chaque personne.

Il est connu du document EP1904347 d'employer l'une ou l'autre de ces deux technologies pour identifier un conducteur de véhicule.

Il est en outre connu un modèle d'authentification biométrique qui sélectionne dynamiquement la méthode biométrique (empreinte digitale, reconnaissance faciale, etc.) en fonction du contexte d'utilisation, voir Wôjtowicz, Adam, et al. Model for adaptable context-based biometric authentication for mobile devices. Personal and Ubiquitous Computing, Springer Verlag, London, GB, vol. 20, no. 2, 1 avril 2016, pp. 195-207. ISSN 1617-4909. DOI: 10.1007/s00779-016-0905-0.

Malheureusement, ces deux technologies présentent des fiabilités qui ne sont pas toujours sans faille. Ainsi, il arrive régulièrement que les algorithmes ne permettent pas d'identifier une personne.

### PRÉSENTATION DE L'INVENTION

Afin d'améliorer la fiabilité de l'identification des occupants d'un véhicule, la présente invention propose de s'appuyer en combinaison sur deux technologies d'identification biométrique, tout en déterminant le contexte de mesure afin de déterminer laquelle de ces deux technologies est la plus apte à être utilisée.

Plus particulièrement, on propose selon l'invention un procédé d'identification tel que défini en introduction, comportant en outre une étape d'acquisition d'au moins une donnée relative au contexte de l'enregistrement, chaque donnée étant enregistrée dans une base de données de contexte dans laquelle sont déjà enregistrées des données précédemment acquises, l'ensemble des données enregistrées étant réparti en quatre grappes associées aux quatre situations suivantes :
i) les deux empreintes biométriques enregistrées fournissent une identification fiable de l'occupant,
ii) la première seulement des deux empreintes biométriques enregistrées fournit une identification fiable de l'occupant,
iii) la deuxième seulement des deux empreintes biométriques enregistrées fournit une identification fiable de l'occupant,
iv) aucune des deux empreintes biométriques enregistrées ne fournit une identification fiable de l'occupant, et
dans lequel
- dans la situation ii), il est prévu d'enregistrer dans la deuxième base de données d'empreintes la deuxième empreinte biométrique comme une nouvelle deuxième empreinte de référence, et d'associer ladite deuxième empreinte biométrique audit occupant identifié grâce à la première empreinte biométrique, et/ou
- dans la situation iii), il est prévu d'enregistrer dans la première base de données d'empreintes la première empreinte biométrique comme une nouvelle première empreinte de référence, et d'associer ladite première empreinte biométrique audit occupant identifié grâce à la deuxième empreinte biométrique.

La demanderesse a réalisé une étude qui lui a permis de constater que la technologie d'identification vocale peut être affectée par le contexte dans lequel se trouve le locuteur. En effet, ce contexte provoque un changement de voix qui, même minime, peut perturber les algorithmes d'identification vocale. On peut ainsi citer différents éléments de contextes perturbateurs : un changement de position du locuteur (par rapport à la position dans laquelle il s'était enrôlé), une émotion différente, un état de santé différent. Si le contexte n'est pas nécessairement la cause complète de l'échec de l'identification vocale, il y contribue néanmoins à des degrés divers.

La demanderesse a en outre pu constater que les mêmes phénomènes affectaient d'autres processus d'identification biométriques, par exemple le processus de reconnaissance faciale. En effet, le visage de la personne à identifier pourra présenter une forme différente selon l'émotion qu'il ressent, selon la température extérieure...

En résumé, l'identification biométrique peut souffrir dans ses performances de changements de contexte (position de l'utilisateur, conditions variables d'éclairage...). Cette baisse de performance provient du fait que la signature biométrique de référence est créée lors d'une phase d'enrôlement dans un habitacle nominal (véhicule à l'arrêt, utilisateur généralement concentré et face camera), alors que chaque tentative d'identification subséquente pourra survenir dans des conditions différentes.

La présente invention propose alors une solution d'apprentissage permettant de déterminer dans quelle mesure la complexité du contexte conducteur et routier affecte les résultats des technologies d'identification employées, ce qui permet ensuite d'optimiser l'identification biométrique.

L'une des idées de l'invention est en effet de générer des grappes de données (ou « clusters ») qui permettent de distinguer les contextes dans lesquels l'identification biométrique fonctionne de ceux dans lesquels elle ne fonctionne pas. Cela permet d'identifier très finement les chances de succès des technologies d'identification employées compte tenu du contexte rencontré, de façon par exemple à choisir la plus sûre.

Ainsi, il a pu être constaté que globalement, la biométrie vocale est robuste en cas de variations du contexte lié au conducteur et au véhicule, alors que la biométrie faciale est plus robuste aux variations de positions du conducteur.

D'autres caractéristiques avantageuses et non limitatives du procédé d'identification conforme à l'invention, prises individuellement ou selon toutes les combinaisons techniquement possibles, sont les suivantes :
- dans la situation ii), la deuxième empreinte biométrique est rattachée à la au moins une donnée acquise relative au contexte de l'enregistrement ;
- dans la situation iii), la première empreinte biométrique est rattachée à la au moins une donnée acquise relative au contexte de l'enregistrement ;
- dans l'étape b1), la première empreinte de référence est choisie en fonction de la au moins une donnée acquise relative au contexte de l'enregistrement ;
- dans l'étape b2) la deuxième empreinte de référence est choisie en fonction de la au moins une donnée acquise relative au contexte de l'enregistrement ;
- lorsque la base de données de contexte comprend un nombre de données supérieur à un seuil prédéterminé, il est prévu à l'étape b1) de première comparaison de choisir la première empreinte biométrique parmi les au moins deux empreintes biométriques enregistrées à l'étape a) en fonction de la grappe à laquelle appartient ladite au moins une donnée acquise
- à l'étape d'acquisition, il est prévu d'acquérir plusieurs données relatives au contexte et qui forment ensemble un vecteur ;
- ladite donnée caractérise ledit occupant ou l'environnement autour du véhicule automobile ou le véhicule automobile au moment de l'enregistrement desdites au moins deux empreintes biométriques ;
- le vecteur est relatif à l'état de l'occupant ou à l'état de la conversation que l'occupant entretient avec une intelligence artificielle ou à la route empruntée par le véhicule automobile ou à l'état de la circulation ou au véhicule automobile, et il comprend au moins deux données distinctes ;
- les première et deuxième empreintes biométriques sont respectivement une empreinte vocale et une empreinte faciale ;
- il est prévu une étape de génération d'empreinte vocale enrichie au cours de laquelle on acquiert des bruits présents dans l'environnement dudit l'occupant et une deuxième empreinte biométrique de l'occupant, on enrichit la première empreinte de référence avec les bruits acquis, et on met en œuvre les étapes b1) à c) et l'étape d'acquisition pour enrichir la base de donnée de contexte et la première base de données d'empreintes, de préférence en tâche de fond sans solliciter ledit occupant ;
- l'empreinte vocale enrichie est générée à partir d'une première empreinte de référence enregistrée dans un habitacle nominal, par exemple lors d'une phase d'enrôlement ;
- les étapes a) à c) et l'étape d'acquisition sont mises en œuvre à chaque fois que l'occupant prononce une phrase clé prédéterminée.

L'invention propose également un véhicule automobile comportant au moins un siège d'accueil d'un occupant, des moyens de mesure de deux empreintes biométriques de types distincts, et un calculateur adapté à mettre en œuvre un procédé d'identification tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DÉTAILLÉE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une représentation schématique des différentes étapes d'un procédé d'identification conforme à l'invention ; et
[Fig. 2] est un graphique représentant quatre grappes de données utilisées dans le cadre de ce procédé d'identification.

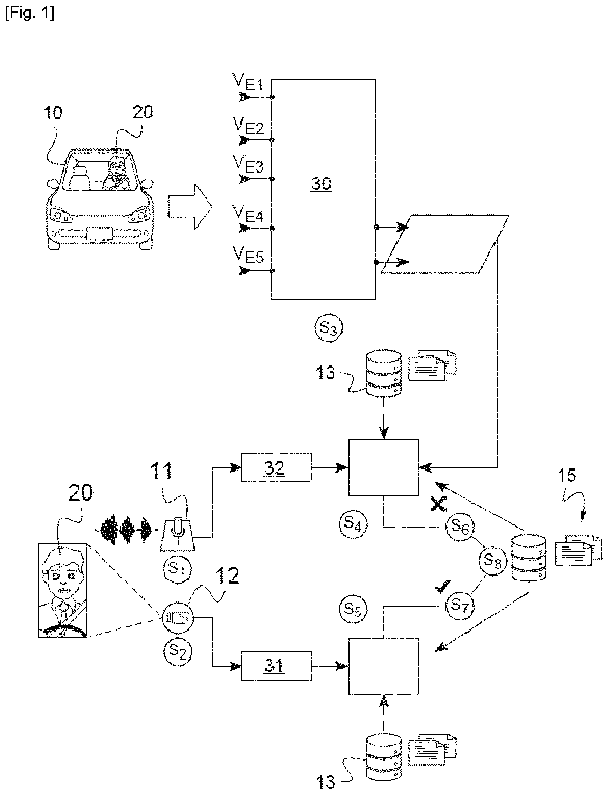

Sur la figure 1, on a représenté un véhicule automobile 10 et un usager 20 de ce véhicule automobile.

Il pourrait s'agir de n'importe quel type de véhicule, par exemple un camion, un bus, un train ou même un avion.

Il s'agit ici d'une voiture comportant classiquement un châssis qui délimite un habitacle pour notamment le conducteur du véhicule.

Dans cet habitacle, le véhicule comporte différents équipements permettant d'identifier au moins le conducteur, voire chacun des occupants du véhicule. Dans la suite de cet exposé, pour des raisons de clarté, on s'intéressera uniquement à l'identification du conducteur.

L'un de ces équipements est un microphone 11 placé et orienté de telle sorte qu'il est en mesure d'enregistrer la voix du conducteur 20.

Un autre de ces équipements est un capteur d'images, et plus précisément ici une caméra 12 placée et orientée de telle manière qu'elle est en mesure de capter des images du visage du conducteur 20 lorsque ce dernier conduit le véhicule.

Le véhicule automobile 10 comporte par ailleurs un calculateur conçu pour mettre en œuvre un procédé d'identification du conducteur, comme cela sera bien décrit ci-après.

Ce calculateur comporte un processeur, une mémoire et une interface d'échange de données, connectée par exemple à un réseau du véhicule de type CAN.

Grâce à cette interface, le calculateur est adapté à recevoir différentes informations, et notamment les signaux acquis (et éventuellement traités) par le microphone 11 et la caméra 12.

Grâce à sa mémoire, le calculateur mémorise une application informatique, constituée de programmes d'ordinateur comprenant des instructions dont l'exécution par le processeur permet la mise en œuvre par le calculateur du procédé d'identification décrit ci-après.

**Le** calculateur mémorise en outre une base de données dans laquelle sont stockées des empreintes biométriques de référence. Cette base de données sera ci-après appelée « base de données d'empreintes 13 ».

Cette base de données d'empreintes 13 enregistre, pour chaque utilisateur du véhicule qui s'est enregistré auprès de ce service d'identification (on parle « d'enrôlement »), au moins une empreinte vocale de référence et au moins une empreinte faciale de référence.

Ici, ces deux empreintes sont donc stockées dans la même base de données. Bien entendu, en variante, elles pourraient être stockées dans des première et seconde base de données distinctes et non communes.

Ces empreintes sont des caractéristiques permettant d'identifier une personne de façon fiable.

L'empreinte vocale de référence est ici construite lors de la phase d'enrôlement, laquelle consiste à demander à l'usager de prononcer (et éventuellement de répéter plusieurs fois) une phrase clé prédéterminée, puis à tirer de ces enregistrements des informations permettant de construire l'empreinte vocale de référence. Cette phase d'enrôlement est réalisée une seule fois, par exemple lorsque l'usager conduit pour la première fois le véhicule. La phrase clé est soit imposée par le constructeur du véhicule (par exemple « Hello Renault »), soit choisie par l'usager.

L'empreinte faciale de référence est construite de façon similaire au cours de la phase d'enrôlement.

On notera que le contexte (correspondant à des conditions de bruit, d'éclairage, de position du conducteur...) dans lequel cette phase d'enrôlement est enregistrée est particulier. Ce contexte pourra être qualifié de « nominal ». On dira que la phase d'enrôlement est ainsi réalisée dans un « habitacle nominal ».

Ces deux empreintes de référence sont donc enregistrées dans une base de données d'empreintes 13 de telle sorte que chaque enregistrement de cette base de données soit associé à un usager particulier et comporte un identifiant de cet usager, les deux empreintes de référence et par exemple des droits et préférences associés à cet usager (droit d'ouvrir les fenêtres, préférence musicale...).

Le calculateur comporte ici en outre une unité de contrôle du conducteur (plus communément désignée par DMS, de l'anglais « Driver Monitoring System »), qui permet de déterminer des données relatives à la vigilance du conducteur, son état de nervosité, de détecter un éternuement ou un bâillement...

Grâce au réseau CAN, il peut en outre obtenir de nombreuses informations relatives par exemple au véhicule (vitesse, itinéraire choisi...) ou à son environnement (luminosité...).

Il est en outre connecté à un réseau externe (par exemple le réseau Internet), ce qui lui permet d'obtenir des informations supplémentaires (de trafic, de météo...).

Selon une caractéristique particulièrement avantageuse de l'invention, le calculateur est adapté à mettre en œuvre un procédé d'identification du conducteur 20 qui comprend les étapes suivantes :
- enregistrement d'au moins deux empreintes biométriques du conducteur associées à deux technologies d'identification distinctes,
- acquisition de données relatives au contexte de l'enregistrement (ces données seront ci-après appelées paramètres contextuels),
- sélection, sur la base de ces données, de l'une au moins des deux technologies d'identification,
- comparaison de l'empreinte associée à cette technologie avec une empreinte de référence, et
- identification du conducteur en fonction du résultat de la comparaison.

Les deux technologies d'identification sont de préférence des technologies d'identification vocale et faciale.

On peut alors décrire plus en détail les différentes étapes permettant de mettre en œuvre ce procédé, en référence encore à la figure 1. Ces étapes seront ici décrites dans un ordre particulier facilitant la compréhension de l'invention, mais l'ordre de mise en œuvre de ces étapes pourrait différer.

Une tâche de fond consiste à enregistrer en continu les signaux sonores dans l'habitacle du véhicule à l'aide du microphone 11.

La première étape S₁ consiste alors à détecter chaque instant où le conducteur prononce la phrase clé (la même que celle utilisée pendant la phase d'enrôlement) puis à enregistrer soit le signal vocal correspondant à la prononciation de cette phrase clé, soit des données caractérisant ce signal.

Ici, en pratique, une empreinte de ce signal est générée en employant le même algorithme que celui utilisé pendant la phase d'enrôlement pour créer l'empreinte vocale de référence. Cette empreinte vocale enregistrée à un instant t est alors stockée dans un registre 32 de la mémoire du calculateur.

La seconde étape S₂, déclenchée par la première, consiste quant à elle à prendre une photo ou un séquence vidéo de courte durée du visage du conducteur puis à enregistrer dans la mémoire du calculateur soit cette image ou cette séquence, soit des données issues de cette image ou de cette séquence.

Ici, en pratique, une empreinte biométrique du visage du conducteur est générée en employant le même algorithme que celui utilisé pendant la phase d'enrôlement pour créer l'empreinte faciale de référence. Cette empreinte faciale enregistrée à un instant t est alors stockée dans un registre 31 de la mémoire du calculateur 30.

La troisième étape S₃ consiste à acquérir des données qui sont relatives au contexte de conduite à l'instant t et qui peuvent avoir une influence sur l'efficacité de l'identification du conducteur via l'une et/ou l'autre des deux technologies d'identification employées.

Ici, un grand nombre de données sont acquises. Ces données sont ici réparties en différents ensembles cohérents qui forment chacun un « vecteur d'état ».

Dans l'exemple ici considéré il est prévu d'acquérir suffisamment de données pour construire cinq vecteurs d'état formés chacun de plusieurs données.

Chaque vecteur d'état contient ainsi potentiellement la cause ou une partie de la cause de la réussite ou de l'échec de l'identification biométrique.

Le premier vecteur d'état qui est ici considéré est lié au contexte dans lequel se trouve le conducteur à l'instant t (il sera ci-après appelé « vecteur conducteur V_{E1} »). Il permettra de tenter de corréler le contexte dans lequel se trouve le conducteur avec l'échec ou le succès de la tentative d'identification biométrique du conducteur.

Ce vecteur conducteur comporte au moins deux paramètres contextuels. Dans l'exemple ici considéré, il en comporte onze.

Ces paramètres contextuels sont ici les suivants.

Le premier paramètre contextuel est le niveau de vigilance du conducteur. En effet, si le conducteur est peu vigilant, sa prononciation est généralement plus lente et moins articulée qu'à l'accoutumé, ce qui peut entrainer l'échec de son identification vocale. Ce paramètre est obtenu au moyen du système de contrôle du conducteur. Il peut par exemple être évalué au moyen d'un réseau de neurones. Il est ici compris sur une échelle de 0 à 5, 0 indiquant que le conducteur est très peu vigilant.

Le deuxième paramètre contextuel est le niveau de nervosité du conducteur. En effet, si le conducteur est énervé, sa prononciation et la forme de son visage peuvent être affectées par cet état, ce qui peut entrainer l'échec de son identification vocale et faciale. Ce paramètre est aussi obtenu au moyen du système de contrôle du conducteur. Il peut par exemple être évalué au moyen d'un réseau de neurones. Il est ici compris sur une échelle de 0 à 5, 0 indiquant que le conducteur est très calme.

Le troisième paramètre contextuel est l'éventualité d'un éternuement précédant l'énonciation de la phrase clé (par exemple dans les 5 secondes précédant cette énonciation). On comprend qu'un tel éternument peut avoir une influence sur la forme du visage et sur la manière d'articuler du conducteur. Ce paramètre est obtenu au moyen du système de contrôle du conducteur. Il peut par exemple être déterminé par analyse d'images ou évalué au moyen d'un réseau de neurones. Il est ici égal à 0 en l'absence d'éternuement et égal à 1 sinon.

Le quatrième paramètre contextuel est l'éventualité d'un bâillement précédant l'énonciation de la phrase clé (par exemple dans les 5 secondes précédant cette énonciation). On comprend qu'un tel bâillement peut avoir une influence sur la forme du visage et sur la manière d'articuler du conducteur. Ce paramètre est obtenu au moyen du système de contrôle du conducteur. Il peut par exemple être déterminé par analyse d'images ou évalué au moyen d'un réseau de neurones. Il est ici égal à 0 en l'absence de bâillement et égal à 1 sinon.

Le cinquième paramètre contextuel est le niveau d'attention visuelle du conducteur. Il est obtenu par analyse d'images, en fonction des angles de roulis, de lacet et de tangage de la tête du conducteur par rapport à une position moyenne. Il est par exemple évalué par analyse d'images. Il est ici formé par le triplet d'angles mesurés. Au sujet de ce paramètre, on pourra préciser que l'angle de la tête affecte l'orientation de la bouche de l'usager, ce qui peut avoir une influence sur la prononciation de la phrase clé et/ou sur la capture des signaux audio par le microphone.

Les sixième, septième et huitième paramètres contextuels correspondent à une utilisation manuelle par le conducteur d'un équipement intérieur du véhicule automobile. Ainsi, le sixième paramètre contextuel est choisi égal à 1 si le conducteur manipule la radio (ou l'a manipulée dans un délai déterminé d'au maximum quelques secondes), et à 0 sinon. Le septième paramètre contextuel est choisi égal à 1 si le conducteur manipule la climatisation (ou l'a manipulée dans un délai déterminé d'au maximum quelques secondes), et à 0 sinon. Le huitième paramètre contextuel est choisi égal à 1 si le conducteur manipule un équipement multimédia (ou l'a manipulé dans un délai déterminé d'au maximum quelques secondes), et à 0 sinon. Une telle manipulation requiert en effet une attention particulière du conducteur, ce qui peut impacter l'expression verbale du locuteur.

Le neuvième paramètre contextuel est la durée de roulage sans interruption (par exemple la durée depuis la dernière sortie du locuteur hors de son véhicule). Il est obtenu par analyse d'images. Il est par exemple choisi égal à 0 si cette durée est inférieure à une heure, égal à 1 si cette durée est comprise entre une et deux heures, et égale à 3 au-delà de deux heures de roulage. La fatigue latente du conducteur impacte en effet son élocution.

Le dixième paramètre contextuel est la pression exercée par le conducteur sur les pédales (ou la fréquence de cette pression). Il est par exemple choisi égal à 0 si la pression est normale, 1 si elle est importante et 2 si elle est très élevée. Cette pression (ou cette fréquence) permet d'estimer la captation de l'attention du conducteur par la conduite du véhicule lors de son identification vocale, ce qui est susceptible d'influencer son élocution.

Le onzième paramètre contextuel concerne la tenue du volant par le conducteur. Il peut être déterminé en fonction du nombre de mains du conducteur sur le volant ou de la pression exercée par les mains sur le volant. Ici, il est choisi égal à 1 lorsque les deux mains du conducteur sont sur le volant, et à 0 sinon. Ce paramètre permet d'indiquer l'attention ou le relâchement du conducteur, ce qui peut influencer sa prononciation de la phrase clé.

Le second vecteur d'état qui est ici considéré est lié aux récents échanges verbaux du conducteur avec l'intelligence artificielle du véhicule (il sera ci-après appelé (« vecteur conversationnel V_{E2} »). Il permettra de tenter de corréler le contexte dans lequel se trouve le conducteur avec l'échec ou le succès de la tentative d'identification biométrique du conducteur.

Ce vecteur conversationnel comporte au moins deux paramètres contextuels. Dans l'exemple ici considéré, il en comporte cinq. En variante, il pourrait en comporter davantage.

Ces paramètres contextuels sont ici les suivants.

Le premier paramètre contextuel est lié à la présence ou non d'une conversation déjà établie avec l'intelligence artificielle. En effet, si le locuteur est déjà engagé dans des enchainements de tours de parole avec l'intelligence artificielle, cela peut modifier sa prononciation et entrainer l'échec de son identification vocale. Ce paramètre contextuel prend la valeur 1 en cas de présence de conversation antérieure et 0 sinon. Il est obtenu par analyse des signaux vocaux enregistrés par le microphone.

Le second paramètre contextuel est lié à la nécessité pour le locuteur de devoir répéter ou non sa locution. En effet, si le locuteur doit répéter sa demande pour que l'intelligence artificielle comprenne sa demande, cela peut changer son ton et/ou sa tonalité vocale et/ou son visage (sourcils froncés...) et a un impact sur son identification par biométrie. Ce paramètre contextuel prend la valeur 1 en cas de présence de répétition de la locution et 0 sinon. Il est obtenu par analyse des signaux vocaux enregistrés par le microphone.

Le troisième paramètre contextuel est lié à la présence d'une incompréhension entre le locuteur et l'intelligence artificielle. En effet, si la conversation est stérile, cela peut générer une frustration pouvant potentiellement modifier la prosodie vocale et le visage du locateur et donc impacter son identification vocale ou faciale. Ce paramètre contextuel prend la valeur 1 en cas d'incompréhension et 0 sinon. Il est obtenu par analyse des signaux vocaux enregistrés par le microphone.

Le quatrième paramètre contextuel est un indice de familiarité indiquant si le locuteur est habitué à avoir une conversation avec une intelligence artificielle. Un manque de familiarité risque en effet de modifier la façon de parler du locuteur, ce qui aura un impact sur son identification vocale. Ce paramètre contextuel prend la valeur 1 en cas de familiarité et 0 sinon. Cet indice est obtenu compte tenu d'un historique de conversations enregistré dans la mémoire du calculateur.

Le cinquième paramètre contextuel est un indice de vulgarité dans les mots choisis par le locuteur. Un manque de courtoisie peut en effet reporter un énervement du locuteur et donc une forte variation de ton pouvant directement impacter son élocution et la forme de son visage, et donc la capacite du calculateur à correctement identifier le conducteur. Ce paramètre contextuel prend la valeur 1 en cas de vulgarité et 0 sinon. Il est obtenu par analyse des signaux vocaux enregistrés par le microphone.

Le troisième vecteur d'état qui est ici considéré est lié à la route et au trajet emprunté par le véhicule (il sera ci-après appelé « vecteur route V_{E3} »). Il permettra de tenter de corréler le contexte dans lequel se trouve le véhicule avec l'échec ou le succès de la tentative d'identification biométrique du conducteur.

Ce vecteur route comporte au moins deux paramètres contextuels. Dans l'exemple ici considéré, il en comporte six. En variante, il pourrait en comporter davantage.

Ces paramètres contextuels sont ici les suivants.

Le premier paramètre contextuel est lié au type de route empruntée. En effet, le type de route renseigne sur les bruits de roulage pouvant, en s'additionnant au signal de parole du locuteur, directement nuire à la bonne identification par biométrie vocale. Ce paramètre contextuel prend ici une valeur entre 0 et 8 selon le type de route. Il est obtenu par lecture de données dans le système de navigation du véhicule (lequel comporte une carte enrichie dans laquelle chaque route est caractérisée par un type au moyen d'un chiffre compris entre 0 et 8).

Le second paramètre contextuel est lié à la météo rencontrée. En effet, la situation météorologique subie par le véhicule tel que le bruit de pluie et/ou du vent et/ou des éclairs peut dégrader les performances de la biométrie vocale et faciale. En outre, de mauvaises conditions météo peuvent capter une grande partie de l'attention du conducteur et modifier sa prononciation. Ce paramètre contextuel prend ici la valeur 0 si les conditions météo sont mauvaises et la valeur 1 sinon. Il est ici obtenu par exemple par traitement des images acquises à l'avant du véhicule ou lors de la réception de bulletin météo via le réseau Internet.

Le troisième paramètre contextuel est lié à la forme de la route empruntée, vue du dessus (dans un plan horizontal), à l'instant t de l'énonciation de la locution. En effet, une forme de route peut contribuer à l'augmentation de la charge cognitive du conducteur et donc à la variation de sa voix. Par exemple le passage d'une longue ligne droite à une route sinueuse peut se ressentir dans le débit vocal du conducteur et dégrader les performances de la biométrie vocale. Ce paramètre contextuel prend ici la valeur 0 si la forme de la route est simple et ne génère aucun stress et la valeur 1 sinon. Il est ici obtenu par exemple par analyse de la forme de la route lue sur le logiciel de navigation.

Le quatrième paramètre contextuel est lié à la pente de la route empruntée à l'instant t. Pour les mêmes raisons que précité, cette pente peut dégrader les performances de la biométrie vocale. Ce paramètre contextuel prend ici la valeur 0 si la pente de la route est inférieure à un seuil prédéterminé et la valeur 1 sinon. Il est ici obtenu par exemple par lecture de la pente de la route sur le logiciel de navigation.

Le cinquième paramètre contextuel est lié à la densité de la circulation sur la route. En effet, les bruits urbains (moteurs, klaxons) peuvent nuire à la performance de la biométrie vocale. Ce paramètre contextuel prend ici la valeur 0 si la densité de la circulation est importante et la valeur 1 sinon. Il est ici obtenu par exemple par lecture sur le logiciel de navigation du type de territoire rencontré (ville, campagne...) ou par analyse des images de l'environnement du véhicule.

Le sixième paramètre contextuel est lié à la dangerosité de la route empruntée (est-on en présence d'une route de montage ?). En effet, le contexte de route d'altitude requiert une grande vigilance du conducteur pouvant influencer son débit vocal, ce qui peut dégrader les performances de la biométrie vocale. Ce paramètre contextuel prend ici la valeur 0 si le véhicule se trouve sur une route de montage et la valeur 1 sinon. Il est ici obtenu par exemple par lecture de cette information sur le logiciel de navigation.

Le quatrième vecteur d'état qui est ici considéré est lié à la configuration de la circulation sur la route empruntée par le véhicule à l'instant t (il sera ci-après appelé « vecteur circulation V_{E4} »). Il permettra de tenter de corréler le contexte dans lequel se trouve le véhicule avec l'échec ou le succès de la tentative d'identification biométrique du conducteur.

Ce vecteur circulation comporte au moins deux paramètres contextuels. Dans l'exemple ici considéré, il en comporte trois. En variante, il pourrait en comporter davantage.

Ces paramètres contextuels sont ici les suivants.

Le premier paramètre contextuel est lié aux conditions de visibilité. En effet, des conditions de visibilité difficiles de nuit ou plus faciles de jour impactent directement la concentration du conducteur, ce qui peut avoir une influence sur le débit vocal du conducteur et donc sur l'efficacité de l'identification par biométrie vocale. Un mauvais éclairage du visage du conducteur ou une trop forte luminosité peut aussi avoir une influence néfaste sur la reconnaissance faciale. Ce paramètre contextuel prend ici la valeur 0 en conduite de nuit et la valeur 1 sinon. Il est ici obtenu par exemple en fonction de l'heure ou en fonction de l'état allumé ou éteint des feux du véhicule.

Le second paramètre contextuel est lié à l'éventualité d'un dépassement effectué par le véhicule. En effet, l'attention et la vigilance nécessaires pour effectuer un dépassement en toute sécurité engage la charge cognitive du conducteur, ce qui peut avoir un effet sur la prononciation de la phrase clé et donc sur l'efficacité de la biométrie vocale. Ce paramètre contextuel prend ici la valeur 0 si un dépassement est en cours, et la valeur 1 sinon. Il est ici obtenu par exemple par détection de la position du véhicule sur les différentes voies de la route empruntée.

Le troisième paramètre contextuel est lié à la présence d'un virage. En effet, négocier un virage nécessite une charge cognitive particulière de la part du conducteur, ce qui peut dégrader les performances de la biométrie vocale. Ce paramètre contextuel prend ici la valeur 0 en présence de virage de rayon de courbure inférieur à un seuil prédéterminé, et la valeur 1 sinon. Il est ici obtenu par exemple par lecture des informations dans le logiciel de navigation.

Le cinquième vecteur d'état qui est ici considéré est lié au véhicule (il sera ci-après appelé « vecteur véhicule V_{E5} »). Il permettra de tenter de corréler le contexte dans lequel se trouve le véhicule avec l'échec ou le succès de la tentative d'identification biométrique du conducteur.

Ce vecteur circulation comporte au moins deux paramètres contextuels. Dans l'exemple ici considéré, il en comporte six. En variante, il pourrait en comporter davantage.

Ces paramètres contextuels sont ici les suivants.

Le premier paramètre contextuel est lié à la vitesse du véhicule. En effet, la vitesse est un indice direct de besoin de vigilance, qui a un impact direct sur la concentration du conducteur et donc possiblement sur son débit vocal, ce qui peut affecter la performance de l'identification par biométrie vocale. Ce paramètre contextuel prend ici la valeur 0 si la vitesse du véhicule est inférieure à un seul prédéterminé et la valeur 1 sinon.

Le second paramètre contextuel est lié à un dépassement de la limite de vitesse autorisée ou conseillée sur un tronçon de route. En effet, un tel dépassement a également un impact sur la vigilance du conducteur et peut alors dégrader les performances de la biométrie vocale. Ce paramètre contextuel prend ici la valeur 0 si aucun dépassement de limite de vitesse n'est perçu et la valeur 1 sinon. Il est ici obtenu par exemple en confrontant la vitesse du véhicule avec la limite de vitesse lue dans le logiciel de navigation ou sur les panneaux routiers.

Le troisième paramètre contextuel est lié à la présence ou non d'alarme de sécurité. En effet, de telles alarmes captent l'attention du conducteur, ce qui peut notamment l'amener à interrompre sa locution et dégrader les performances de la biométrie vocale. Ces signaux, s'ils sont vocaux, vont en outre générer des sons venant se mêler à la locution, rendant cette dernière incompréhensible. Ce paramètre contextuel prend ici la valeur 0 si une telle alarme est en route et la valeur 1 sinon. Il est ici obtenu par exemple par lecture de la valeur des indices de sécurité sur le réseau CAN.

Le quatrième paramètre contextuel est lié à la position des ouvrants avant et arrière (en l'espèce des fenêtres avant et arrière). En effet, une fenêtre ouverte génère un bruit qui rend l'identification par biométrie vocale difficile. Ce paramètre contextuel prend ici la valeur 0 si les fenêtres sont toutes fermées et la valeur 1 sinon.

Le cinquième paramètre contextuel est lié au niveau sonore des sources media du véhicule (radio, téléphone...), lequel concoure à rendre la locution moins intelligible, ce qui peut dégrader les performances de la biométrie vocale. Ce paramètre contextuel prend ici une valeur comprise entre 0 et 5 selon le niveau sonore. Il est ici obtenu en communiquant avec les sources média qui détiennent les informations recherchées.

Le sixième paramètre contextuel est lié à l'accélération subie par le véhicule automobile (l'accélération totale, ou au moins une de ses composantes). En effet, une accélération élevée entraine un besoin de contrôle de la part du conducteur, ce qui requiert son attention et peut donc modifier sa voix. Ce paramètre contextuel prend ici la valeur 0 si l'accélération totale est inférieure à un seuil prédéterminé et la valeur 1 sinon. Il est ici obtenu par exemple en communiquant avec un accéléromètre embarqué dans le véhicule.

Une fois l'ensemble des paramètres contextuels acquis, le calculateur connaît les valeurs des vecteurs d'états V_{E1}, V_{E2}, V_{E3}, V_{E4}, V_{E5} considérés.

Il va alors être en mesure de comparer ces valeurs avec celles qui auront été précédemment enregistrées (depuis la phase d'enrôlement du conducteur) dans une base de données de vecteurs d'états. Cette base de données sera ci-après appelée « base de données de contexte 15 ».

Chaque vecteur d'état peut alors être représenté dans un espace à Nᵢ dimensions, ce nombre Nᵢ de dimensions étant égal au nombre de paramètres contextuels du vecteur d'état considéré.

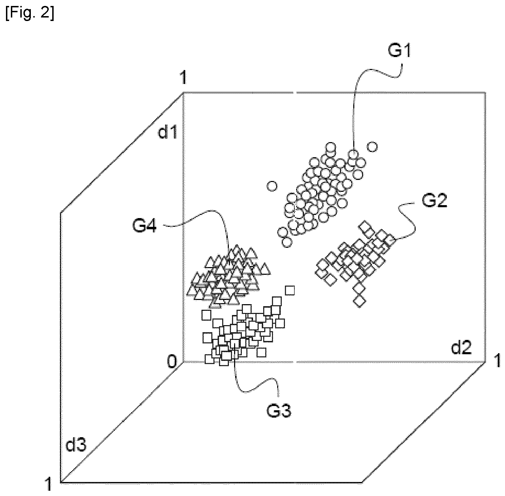

Pour bien illustrer la suite, on peut considérer un vecteur d'état qui ne comporterait que trois paramètres contextuels d1, d2, d3 et qui serait donc représentable dans un espace à trois dimensions tel que celui illustré sur la figure 2. Cela n'est pas limitatif, un vecteur d'état peut comprendre deux paramètres contextuels, quatre paramètres contextuels ou plus de quatre paramètres contextuels.

Dans cet espace, on a représenté par des points les triplets de valeurs que les paramètres contextuels d1, d2, d3 du vecteur d'état ont pris à chaque fois que le conducteur a prononcé la phrase clé depuis la phase d'enrôlement. Les coordonnées de ces points sont mémorisées dans la base de données de contexte 15.

En d'autres termes, chaque point correspond à une acquisition, à un instant t, de la phrase clé, et chaque point présente une abscisse, une ordonnée et une altitude respectueusement formée par la valeur de l'un des trois paramètres contextuels d1, d2, d3 à cet instant t.

On constate sur la figure 2 que ces points se répartissent naturellement en quatre groupes distincts ou « grappes de valeurs » (désignés ci-après « clusters G1, G2, G3, G4 »).

En pratique, chaque cluster correspond à une situation particulière.

Le premier cluster G1 correspond à la situation dans laquelle le contexte (défini par les valeurs du vecteur d'état considéré) était favorable à une identification du conducteur tant par biométrie vocale que par biométrie faciale.

Le second cluster G2 correspond à la situation dans laquelle le contexte était favorable à une identification du conducteur uniquement par biométrie vocale mais pas par biométrie faciale.

Le troisième cluster G3 correspond à la situation dans laquelle le contexte était favorable à une identification du conducteur uniquement par biométrie faciale mais pas par biométrie vocale.

Le quatrième cluster G4 correspond à la situation dans laquelle le contexte n'était pas favorable à une identification du conducteur par biométrie vocale ou par biométrie faciale.

A ce stade, on peut rappeler que l'étape S₃ permet de déterminer les valeurs de cinq vecteurs d'état.

Le calculateur peut donc déterminer, pour chacun de ces vecteurs d'états V_{E1}, V_{E2}, V_{E3}, V_{E4}, V_{E5} considérés, dans quel cluster il se trouve afin de savoir si le contexte est favorable ou non à une identification par biométrie faciale ou vocale.

En règle générale, les cinq vecteurs d'état appartiendront au même cluster, qui sera ci-après appelé « cluster sélectionné ». Toutefois, si ce n'est pas le cas, seul l'un des clusters sera sélectionné. Il s'agira par exemple de celui auquel appartient le plus grand nombre de vecteurs d'état. En cas d'égalité, on pourrait prévoir de donner un poids plus important à certains vecteurs d'état (par exemple au vecteur conducteur V_{E1}).

A ce sujet, on pourra noter que l'un des intérêts de considérer plusieurs vecteurs d'état de tailles intermédiaires plutôt qu'un seul vecteur d'état de taille importante regroupant tous les paramètres contextuels précités est le suivant. Si tous les paramètres contextuels étaient regroupés, les valeurs des vecteurs d'état mesurés ne se regrouperaient pas en quatre clusters distincts, si bien qu'il ne serait pas possible de savoir a priori si les conditions sont propres à une identification biométrique ou non.

Au cours de l'étape S₄, le calculateur peut procéder d'une manière classique à une tentative d'identification du conducteur par biométrie vocale, en comparant l'empreinte vocale acquise à l'instant t avec chaque empreinte vocale de référence mémorisée dans la base de données d'empreintes 13.

En variante, il peut comparer l'empreinte vocale acquise à l'instant t avec une partie seulement des empreintes vocales de référence mémorisées dans la base de données d'empreintes 13, à savoir celles associées au cluster sélectionné. En effet, chaque enregistrement de la base de données d'empreintes 13 pourra stocker, en plus d'une empreinte vocale (et faciale) de référence, une donnée relative au contexte dans lequel cette empreinte a été enregistrée (cette donnée pouvant prendre la forme par exemple des valeurs des vecteurs d'état ou la forme de l'identifiant du cluster correspondant). Alors, à cette étape, on ne considérera que les empreintes vocales de référence qui ont été enregistrées dans le même contexte que l'empreinte vocale acquise à l'instant t.

De la même façon, au cours de l'étape S₅, le calculateur peut procéder d'une manière classique à une tentative d'identification du conducteur par biométrie faciale, en comparant l'empreinte faciale acquise à l'instant t avec chaque empreinte faciale de référence mémorisée dans la base de données d'empreintes 13.

Ici encore, en variante, il peut comparer l'empreinte vocale acquise à l'instant t avec une partie seulement des empreintes vocales de référence mémorisées dans la base de données d'empreintes 13, à savoir celles associées au cluster sélectionné.

Des détails à ce sujet seront fournis plus loin dans cet exposé.

Pour bien comprendre la suite du procédé, on peut, pour l'exemple, considérer le cas où le cluster sélectionné est le troisième cluster G3, ce qui correspond à une situation dans laquelle le contexte est favorable à une identification du conducteur uniquement par biométrie faciale mais pas par biométrie vocale.

Dans cette situation, le calculateur 30 pourrait être programmé pour choisir de ne considérer que le résultat de l'étape S₅, en partant du principe que le résultat de l'étape S₄ sera négatif.

Mais dans le mode de réalisation ici considéré, au cours d'une étape S₆, le calculateur vérifie si le résultat de l'étape S₄ est positif (le conducteur est identifié) ou négatif (le conducteur n'est pas identifié).

Dans notre exemple, il est négatif. Compte tenu du fait que le cluster sélectionné est le troisième, le calculateur sait alors qu'il est probable que le conducteur soit identifiable par biométrie faciale.

Alors, au cours d'une étape S₇, le calculateur vérifie si le résultat de l'étape S₅ est positif (le conducteur est identifié) ou négatif (le conducteur n'est pas identifié).

Dans notre exemple, il est positif.

Le conducteur est alors considéré comme correctement identifié.

Les vecteurs d'état sont alors enregistrés, au cours d'une étape S₈, dans la base de données de contexte 15 (stockant les valeurs des vecteurs d'états), de façon à enrichir les données et construire une base dans laquelle il est de plus en plus facile de distinguer les clusters les uns des autres.

Par ailleurs, le calculateur est en mesure, après identification du conducteur, d'offrir à ce dernier des fonctions qui lui sont adaptées (réglage de la position du fauteuil, démarrage d'une liste de musique, sélection d'une température intérieure...) et de l'autoriser à utiliser des fonctions sécurisées (ouverture des fenêtres, paiement de péage...).

Dans la description qui précède, il a été considéré qu'un nombre suffisant de vecteurs d'état a déjà été mesuré de façon à permettre de distinguer quatre clusters correspondant à quatre situations particulières.

Bien entendu, après la phase d'enrôlement du conducteur, le calculateur ne dispose d'aucune donnée permettant de distinguer ces clusters.

C'est donc un apprentissage qui va se faire en enregistrant, à chaque fois que le conducteur prononce la phrase clé, les valeurs des cinq vecteurs d'état et en associant à ces valeurs une étiquette indiquant si l'identification par biométrie faciale ou vocale a permis d'aboutir à l'identification du conducteur. Les indentifications sont effectuées en tâches de fond avec ces enregistrements, sans solliciter le conducteur.

Il va ainsi être possible de collecter un grand nombre de données en tâche de fond, sans solliciter le conducteur. Ces données vont alors permettre d'obtenir quatre clusters bien différenciés. La situation associée à chaque cluster (identification vocale et facile possible ou non) sera alors connue compte tenu des étiquettes associés à chaque vecteur d'état du cluster considéré.

Dans la situation où seule l'une des deux technologies d'identification biométrique fonctionne (cas des clusters 2 et 3), l'invention propose d'améliorer le taux de réussite de la technologie d'identification qui a échoué.

A titre d'exemple, on peut considérer la situation correspondant à un contexte associé au troisième cluster G3. Ainsi, on considère ici que l'identification vocale a échoué mais que l'identification faciale a abouti.

Cette situation peut par exemple arriver car le conducteur était énervé.

Dans cette configuration, l'idée est de créer une nouvelle empreinte vocale de référence comme pendant la phase d'enrôlement, à la différence majeure près que cette nouvelle empreinte de référence est créée sans solliciter le conducteur, en tâche de fond.

Plus précisément, l'empreinte vocale enregistrée à l'instant t est stockée dans la base de données d'empreintes 13 (celle qui stocke les empreintes biométriques de référence). Elle est stockée dans l'enregistrement associé au conducteur 20 identifié par biométrie faciale.

De cette manière, lors d'une tentative subséquente d'identification du conducteur 20 alors que ce dernier est énervé, l'identification par biométrie vocale permettra de reconnaître le conducteur 20.

Ainsi, il est possible de créer plusieurs empreintes vocales de référence correspondant à des situations particulières dans lesquelles, jusqu'alors, il n'était pas possible d'identifier le conducteur à l'aide de sa seule voix.

A contrario, il sera aussi possible de créer plusieurs empreintes faciales de référence correspondant à des situations particulières dans lesquelles, jusqu'alors, il n'était pas possible d'identifier le conducteur à l'aide de son seul visage.

De cette façon, il sera de plus en plus rare de se trouver dans une situation dans laquelle l'identification vocale ou faciale ne sera pas possible.

Petit à petit, la taille du premier cluster G1 sera donc de plus en plus grande.

A ce stade, on pourra noter qu'au cours des étapes S₄ (et S₅), il a été expliqué que le calculateur procède à une tentative d'identification du conducteur par biométrie vocale (et faciale), en comparant l'empreinte vocale acquise à l'instant t avec chaque empreinte vocale (et faciale) de référence mémorisée dans la base de données d'empreintes 13.

Pour réduire le temps nécessaire afin de trouver une empreinte de référence qui corresponde à l'empreinte acquise à l'instant t, il est prévu de considérer les empreintes de référence dans un ordre particulier.

Ainsi, l'empreinte acquise à l'instant t sera tout d'abord comparée à la première empreinte de référence, celle issue de la phase d'enrôlement.

Si le résultat de la comparaison est négatif et si le nombre d'empreintes de référence enregistrées dans la base de données d'empreintes est inférieur à un seuil prédéterminé, elle sera ensuite successivement comparée à toutes les empreintes de référence enregistrées jusqu'à ce que l'identification aboutisse.

En revanche, si le résultat de la comparaison est négatif et si le nombre d'empreintes de référence enregistrées dans la base de données d'empreintes est supérieur à un seuil prédéterminé, elle sera uniquement comparée aux empreintes de référence enregistrées dans le même contexte (c'est-à-dire correspondant au même cluster).

Le seuil considéré sera supérieur à 100, et ici compris entre 200 et 300.

Si les résultats de ces comparaisons sont encore négatifs, on peut prévoir de considérer que la tentative d'identification du conducteur a échoué par biométrie vocale (ou faciale) a échoué.

Une idée préférentielle de l'invention consiste à enrichir le plus rapidement possible la base de données d'empreintes 13 (et celle de contexte 15), notamment après la phase d'enrôlement du conducteur 20, en tâche de fond (sans intervention du conducteur et sans attendre de nouvelles informations de la part de ce dernier).

En effet, après cette phase, la base de données ne comporte qu'une seule empreinte de référence enregistrée dans un contexte particulier, si bien que les tentatives d'identification du conducteur dans d'autres types de contextes risquent d'échouer.

Pour ne pas avoir à attendre que le conducteur prononce à nouveau la phrase « Hello Renault » pour enrichir les bases de données, la solution consiste à enregistrer à un instant donné le contexte (sous la forme par exemple des vecteurs précités) ainsi que le bruit ambiant, et une empreinte faciale du conducteur.

Ensuite, l'empreinte de référence enregistrée pendant la phase d'enrôlement est enrichie avec le bruit ambiant. Pour cela, la phrase « Hello Renault » enregistrée est combinée au bruit ambiant (en faisant la somme du signal vocal enregistré et du bruit), puis une nouvelle empreinte vocale est calculée sur la base de cette combinaison.

On procède ensuite de la même façon que précité, en tentant d'identifier le conducteur sur la base de l'empreinte vocale et de l'empreinte faciale puis en enregistrant, si les conditions le permettent, une nouvelle empreinte de référence dans la base de données.

A titre d'exemple, on peut répéter cette opération pour différentes vitesses du véhicule, puisque les bruits aérodynamiques varient en fonction de la vitesse du véhicule.

La présente invention n'est pas limitée au mode de réalisation décrit, mais l'homme du métier saura y apporter toute variante conforme à l'invention.

Ainsi, elle sera applicable dès lors que le véhicule sera équipé d'au moins deux technologies différentes d'identification biométrique. Une identification par l'iris ou digitale pourra ainsi par exemple remplacer l'identification faciale.

Par ailleurs, l'invention s'appliquera de la même manière si le véhicule est équipé de plusieurs microphones permettant d'enregistrer les voix de tous les occupants du véhicule et d'une caméra grand angle (on parle d'habitacle multizone). Ainsi, elle pourra permettre d'identifier chacun des occupants du véhicule.

Enfin, l'invention a ici été décrite comme étant mise en œuvre lorsque la phrase clé est prononcée par le conducteur. En variante, l'invention pourrait aussi être mise en œuvre sans utiliser de phrase clé, mais sur la base de n'importe quelle phrase prononcée.

L'avantage de mettre en œuvre l'étape b2) de deuxième comparaison d'une deuxième empreinte biométrique avec au moins une deuxième empreinte de référence enregistrée dans une deuxième base de données d'empreintes 13, en fonction du résultat de la première comparaison, c'est-à-dire par exemple que l'étape S₅ d'identification du conducteur par biométrie faciale est fonction du résultat de l'étape S₄ d'identification par biométrie vocale, est que seule la première comparaison est systématiquement mise en oeuvre, mais pas nécessairement la seconde. Ainsi, cela permet de ne pas mettre en oeuvre systématiquement les étapes S₄ et S₅ par pertinence des décisions d'identification via les clusters entrainant de fait la minimisation du coût de traitement des données. Notamment, c'est le fait de se trouver dans le même cluster , comme G3, qui crée un lien entre S₅ et S₄ qui pourrait le plus s'apparenter à une dépendance. Par exemple, l'identification vocale a échoué pour une raison inattendue telle qu'une mauvaise prononciation, cependant, le fait que les vecteurs d'état indiquent une appartenance au même cluster G3 implique qu'il s'agit d'une situation vérifiable et corrigeable avec la reconnaissance faciale (bonnes conditions d'enregistrement vidéo). Celle-ci confirme que la décision de l'identification vocale était bien un faux négatif comme prévu dans le cadre du cluster G3.

La donnée de contexte est associée à une grappe, d'une part, lors de la construction de la base de données, on détermine la donnée de contexte, on détermine quelle(s) empreinte(s) biométriques(s) a (ou ont) permis d'identifier le conducteur, et on enregistre la donnée de contexte dans la base de données avec une étiquette correspondante. Ensuite, lors de l'exploitation de la base de données, on détermine la donnée de contexte et on en déduit quelle(s) empreinte(s) biométriques(s) va (ou vont) permettre d'identifier le conducteur.

En pratique, il est possible d'identifier l'occupant en considérant le résultat de l'une ou l'autre des comparaisons effectuées à l'étape b1), compte tenu de la donnée de contexte (typiquement, si elle appartient à la grappe iii, on sait qu'il faudra plutôt considérer l'empreinte faciale). Mais il est aussi possible d'identifier l'occupant en comparant ses deux empreintes (vocale et faciale) avec une partie seulement des empreintes de la base de données, à savoir celles de la grappe qui correspond à la donnée de contexte courante.

Dans le cas évoqué dans la description où les première et deuxième empreintes biométriques sont respectivement une empreinte vocale et une empreinte faciale , c'est-à-dire que la première empreinte est vocale.et la deuxième empreinte est faciale, dans la grappe (cluster) (iv): les vecteurs d'états indiquent que le contexte courant est défavorable pour les deux biométries vocale et faciale et dans la grappe (cluster) (ii): les vecteurs d'états indiquent que le contexte courant est favorable pour la biométrie vocale mais défavorable pour la biométrie faciale.

Dans l'étape c) d'identification dudit occupant 20 en fonction du résultat de la comparaison de la première empreinte biométrique avec la première empreinte de référence et/ou de la deuxième empreinte biométrique avec la deuxième empreinte de référence, il est question d'une alternative qui permet de considérer le résultat de seulement l'une des comparaisons ou celui des deux comparaisons. On se donne ainsi la flexibilité de confirmer « et » par la deuxième biométrie, ou de ne pas confirmer « ou » par la deuxième biométrie, dans les situations que le contexte par clusters affirme déjà comme pleinement favorable G2, ii ou pleinement défavorable G4, iv, ce qui permet par exemple de libérer du temps de traitement, d'où l'intérêt du contexte de conduite par cluster qui optimise ainsi la multi modalités de reconnaissance biométrique.

## Revendications

1. Procédé d'identification d'un occupant (20) d'un véhicule automobile (10),
dans lequel il est prévu des étapes :
a) d'enregistrement d'au moins deux empreintes biométriques dudit occupant (20), lesdites deux empreintes biométriques étant de types différents,
b1) de première comparaison d'une première empreinte biométrique avec au moins une première empreinte de référence enregistrée dans une première base de données d'empreintes (13), et notamment en fonction du résultat de la première comparaison, une étape b2) de deuxième comparaison d'une deuxième empreinte biométrique avec au moins une deuxième empreinte de référence enregistrée dans une deuxième base de données d'empreintes (13), et
c) d'identification dudit occupant (20) en fonction du résultat de la comparaison de la première empreinte biométrique avec la première empreinte de référence et/ou de la deuxième empreinte biométrique avec la deuxième empreinte de référence,
comprenant en outre une étape d'acquisition d'au moins une donnée (d1, d2, d3) relative au contexte de l'enregistrement, chaque donnée (d1, d2, d3) étant enregistrée dans une base de données de contexte (15) dans laquelle sont déjà enregistrées des données précédemment acquises, l'ensemble des données (d1, d2, d3) enregistrées étant réparti en quatre grappes associées aux quatre situations suivantes :
i) les deux empreintes biométriques enregistrées fournissent une identification fiable de l'occupant (20),
ii) la première seulement des deux empreintes biométriques enregistrées fournit une identification fiable de l'occupant (20),
iii) la deuxième seulement des deux empreintes biométriques enregistrées fournit une identification fiable de l'occupant (20),
iv) aucune des deux empreintes biométriques enregistrées ne fournit une identification fiable de l'occupant (20), et
en ce que
- dans la situation ii), il est prévu d'enregistrer dans la deuxième base de données d'empreintes (13) la deuxième empreinte biométrique comme une nouvelle deuxième empreinte de référence, et d'associer ladite deuxième empreinte biométrique audit occupant (20) identifié grâce à la première empreinte biométrique, et/ou
- dans la situation iii), il est prévu d'enregistrer dans la première base de données d'empreintes (13) la première empreinte biométrique comme une nouvelle première empreinte de référence, et d'associer ladite première empreinte biométrique audit occupant (20) identifié grâce à la deuxième empreinte biométrique.

2. Procédé d'identification selon la revendication précédente, dans lequel, dans la situation ii), la deuxième empreinte biométrique est rattachée à la au moins une donnée (d1, d2, d3) acquise relative au contexte de l'enregistrement, et/ou dans la situation iii), la première empreinte biométrique est rattachée à la au moins une donnée (d1, d2, d3) acquise relative au contexte de l'enregistrement, et dans lequel, dans l'étape b1), la première empreinte de référence est choisie en fonction de la au moins une donnée (d1, d2, d3) acquise relative au contexte de l'enregistrement et/ou dans l'étape b2) la deuxième empreinte de référence est choisie en fonction de la au moins une donnée (d1, d2, d3) acquise relative au contexte de l'enregistrement.

3. Procédé d'identification selon l'une quelconque des revendications précédentes, dans lequel, lorsque la base de données de contexte (15) comprend un nombre de données supérieur à un seuil prédéterminé, il est prévu à l'étape b1) de première comparaison de choisir la première empreinte biométrique parmi les au moins deux empreintes biométriques enregistrées à l'étape a) en fonction de la grappe à laquelle appartient ladite au moins une donnée (d1, d2, d3) acquise.

4. Procédé d'identification selon l'une quelconque des revendications précédentes, dans lequel, à l'étape d'acquisition, il est prévu d'acquérir plusieurs données (d1, d2, d3) relatives au contexte et qui forment ensemble un vecteur.

5. Procédé d'identification selon l'une des revendications précédentes, dans lequel ladite donnée (d1, d2, d3) caractérise ledit occupant (20) ou l'environnement autour du véhicule automobile (10) ou le véhicule automobile (10) au moment de l'enregistrement desdites au moins deux empreintes biométriques.

6. Procédé d'identification selon les deux revendications précédentes, dans lequel le vecteur est relatif à l'état de l'occupant (20) ou à l'état de la conversation que l'occupant (20) entretient avec une intelligence artificielle ou à la route empruntée par le véhicule automobile (10) ou à l'état de la circulation ou au véhicule automobile (10), et il comprend au moins deux données (d1, d2, d3) distinctes.

7. Procédé d'identification selon l'une des revendications précédentes, dans lequel les première et deuxième empreintes biométriques sont respectivement une empreinte vocale et une empreinte faciale.

8. Procédé d'identification selon la revendication précédente, comprenant une étape de génération d'empreinte vocale enrichie au cours de laquelle :
- on acquiert des bruits présents dans l'environnement dudit l'occupant (20) et une deuxième empreinte biométrique de l'occupant (20),
- on enrichit la première empreinte de référence avec les bruits acquis,
- on met en œuvre les étapes b1) à c) et l'étape d'acquisition pour enrichir la base de donnée de contexte (15) et la première base de données d'empreintes (13), de préférence en tâche de fond sans solliciter ledit occupant (20).

9. Procédé d'identification selon la revendication précédente, dans lequel l'empreinte vocale enrichie est générée à partir d'une première empreinte de référence enregistrée dans un habitacle nominal, par exemple lors d'une phase d'enrôlement.

10. Procédé d'identification selon l'une des revendications précédentes, dans lequel les étapes a) à c) et l'étape d'acquisition sont mises en œuvre à chaque fois que l'occupant (20) prononce une phrase clé prédéterminée.

11. Véhicule automobile (10) comportant au moins un siège d'accueil d'un occupant (20) et des moyens de mesure de deux empreintes biométriques de types distincts, **caractérisé en ce qu'**il comporte en outre un calculateur (30) adapté à mettre en œuvre un procédé d'identification conforme à l'une des revendications précédentes.

## Patentansprüche

1. Verfahren zur Identifizierung eines Insassen (20) eines Kraftfahrzeugs (10), bei dem folgende Schritte vorgesehen sind:
a) Registrieren von mindestens zwei biometrischen Abdrücken des Insassen (20), wobei die beiden biometrischen Abdrücke unterschiedlicher Art sind;
b1) erstes Vergleichen eines ersten biometrischen Abdrucks mit mindestens einem ersten Referenzabdruck, der in einer ersten Abdruckdatenbank (13) registriert ist, und, insbesondere in Abhängigkeit von dem Ergebnis des ersten Vergleichs, einen Schritt b2) des zweiten Vergleichens eines zweiten biometrischen Abdrucks mit mindestens einem zweiten Referenzabdruck, der in einer zweiten Abdruckdatenbank (13) registriert ist, und
c) Identifizieren des Insassen (20) in Abhängigkeit von dem Ergebnis des Vergleichs des ersten biometrischen Abdrucks mit dem ersten Referenzabdruck und/oder des zweiten biometrischen Abdrucks mit dem zweiten Referenzabdruck, umfassend ferner einen Schritt des Erfassens mindestens eines Datenelements (d1, d2, d3) bezüglich des Kontextes der Registrierung, wobei jedes Datenelement (d1, d2, d3) in einer Kontextdatenbank (15) registriert wird, in der bereits zuvor erfasste Datenelemente registriert sind, wobei die Gesamtheit der registrierten Datenelemente (d1, d2, d3) in vier Cluster unterteilt wird, die den folgenden vier Situationen zugeordnet sind:
i) die beiden registrierten biometrischen Abdrücke ergeben eine zuverlässige Identifizierung des Insassen (20);
ii) nur der erste der beiden registrierten biometrischen Abdrücke ergibt eine zuverlässige Identifizierung des Insassen (20);
iii) nur der zweite der beiden registrierten biometrischen Abdrücke ergibt eine zuverlässige Identifizierung des Insassen (20);
iv) keiner der beiden registrierten biometrischen Abdrücke ergibt eine zuverlässige Identifizierung des Insassen (20), und
dadurch, dass
- in der Situation ii) vorgesehen ist, in der zweiten Abdruckdatenbank (13) den zweiten biometrischen Abdruck als einen neuen zweiten Referenzabdruck zu registrieren und den zweiten biometrischen Abdruck dem durch den ersten biometrischen Abdruck identifizierten Insassen (20) zuzuordnen, und/oder
- in der Situation iii) vorgesehen ist, in der ersten Abdruckdatenbank (13) den ersten biometrischen Abdruck als einen neuen ersten Referenzabdruck zu registrieren und den ersten biometrischen Abdruck dem durch den zweiten biometrischen Abdruck identifizierten Insassen (20) zuzuordnen.

2. Verfahren zur Identifizierung nach dem vorhergehenden Anspruch, wobei in der Situation ii) der zweite biometrische Abdruck mit dem mindestens einen erfassten Datenelement (d1, d2, d3) bezüglich des Kontextes der Registrierung verknüpft wird und/oder in der Situation iii) der erste biometrische Abdruck mit dem mindestens einen erfassten Datenelement (d1, d2, d3) bezüglich des Kontextes der Registrierung verknüpft wird und wobei in dem Schritt b1) der erste Referenzabdruck in Abhängigkeit von dem mindestens einen erfassten Datenelement (d1, d2, d3) bezüglich des Kontextes der Registrierung gewählt wird und/oder in dem Schritt b2) der zweite Referenzabdruck in Abhängigkeit von dem mindestens einen erfassten Datenelement (d1, d2, d3) bezüglich des Kontextes der Registrierung gewählt wird.

3. Verfahren zur Identifizierung nach einem der vorhergehenden Ansprüche, wobei, wenn die Kontextdatenbank (15) eine Anzahl von Datenelementen umfasst, die größer als ein vorgegebener Schwellenwert ist, im Schritt b1) des ersten Vergleichens vorgesehen ist, den ersten biometrische Abdruck unter den mindestens zwei im Schritt a) registrierten biometrischen Abdrücken in Abhängigkeit von dem Cluster, zu dem das mindestens eine erfasste Datenelement (d1, d2, d3) gehört, zu wählen.

4. Verfahren zur Identifizierung nach einem der vorhergehenden Ansprüche, wobei in dem Schritt des Erfassens vorgesehen ist, mehrere Datenelemente (d1, d2, d3) bezüglich des Kontextes zu erfassen, die zusammen einen Vektor bilden.

5. Verfahren zur Identifizierung nach einem der vorhergehenden Ansprüche, wobei das Datenelement (d1, d2, d3) den Insassen (20) oder das Umfeld um das Kraftfahrzeug (10) oder das Kraftfahrzeug (10) zum Zeitpunkt des Registrierens der mindestens zwei biometrischen Abdrücke charakterisiert.

6. Verfahren zur Identifizierung nach den beiden vorhergehenden Ansprüchen, wobei sich der Vektor auf den Zustand des Insassen (20) oder auf den Zustand der Unterhaltung, die der Insasse (20) mit einer künstlichen Intelligenz führt, oder auf die eingeschlagene Route des Kraftfahrzeugs (10) oder auf den Zustand des Verkehrs oder auf das Kraftfahrzeug (10) bezieht und mindestens zwei verschiedene Datenelemente (d1, d2, d3) umfasst.

7. Verfahren zur Identifizierung nach einem der vorhergehenden Ansprüche, wobei der erste und der zweite biometrische Abdruck ein Stimmabdruck beziehungsweise ein Gesichtsabdruck sind.

8. Verfahren zur Identifizierung nach dem vorhergehenden Anspruch, umfassend einen Schritt des Erzeugens eines erweiterten Stimmabdrucks, bei dem:
- Geräusche, die in dem Umfeld des Insassen (20) vorkommen, und ein zweiter biometrischer Abdruck des Insassen (20) erfasst werden,
- der erste Referenzabdruck um die erfassten Geräusche erweitert wird,
- die Schritte b1) bis c) und der Schritt des Erfassens durchgeführt werden, um die Kontextdatenbank (15) und die erste Abdruckdatenbank (13) zu erweitern, bevorzugt als Hintergrundaufgabe, ohne den Insassen (20) zu beanspruchen.

9. Verfahren zur Identifizierung nach dem vorhergehenden Anspruch, wobei der erweiterte Stimmabdruck ausgehend von einem ersten Referenzabdruck erzeugt wird, der in einem nominalen Fahrgastraum registriert wird, beispielsweise bei einer Ersterfassungsphase.

10. Verfahren zur Identifizierung nach einem der vorhergehenden Ansprüche, wobei die Schritte a) bis c) und der Schritt des Erfassens jedes Mal durchgeführt werden, wenn der Insasse (20) einen vorbestimmten Schlüsselsatz ausspricht.

11. Kraftfahrzeug (10), umfassend mindestens einen Sitz zur Aufnahme eines Insassen (20) und Mittel zum Messen von zwei biometrischen Abdrücken verschiedener Art, **dadurch gekennzeichnet, dass** es ferner einen Rechner (30) umfasst, der geeignet ist, ein Verfahren zur Identifizierung nach einem der vorhergehenden Ansprüche durchzuführen.

## Claims

1. Method for identifying an occupant (20) of a motor vehicle (10), wherein the following steps are provided:
a) recording at least two biometric prints of said occupant (20), said two biometric prints being of different types,
b1) a first comparison of a first biometric print with at least one first reference print recorded in a first print database (13), and, notably depending on the result of the first comparison, a step b2) of a second comparison of a second biometric print with at least one second reference print recorded in a second print database (13), and
c) identifying said occupant (20) depending on the result of comparing the first biometric print with the first reference print and/or the second biometric print with the second reference print, further comprising a step of acquiring at least one datum (d1, d2, d3) relating to the recording context, each datum (d1, d2, d3) being recorded in a context database (15) in which previously acquired data are already recorded, the set of recorded data (d1, d2, d3) being divided into four clusters associated with the following four situations:
i) both of the recorded biometric prints provide reliable identification of the occupant (20),
ii) only the first of the two recorded biometric prints provides reliable identification of the occupant (20),
iii) only the second of the two recorded biometric prints provides reliable identification of the occupant (20),
iv) neither of the two recorded biometric prints provides reliable identification of the occupant (20), and
in that
- in situation ii), it is anticipated that the second biometric print be recorded in the second print database (13) as a new second reference print, and that said second biometric print be associated with said occupant (20) identified by virtue of the first biometric print, and/or
- in situation iii), it is anticipated that the first biometric print be recorded in the first print database (13) as a new first reference print, and that said first biometric print be associated with said occupant (20) identified by virtue of the second biometric print.

2. Identification method according to the preceding claim, wherein, in situation ii), the second biometric print is attached to the at least one acquired datum (d1, d2, d3) relating to the recording context, and/or, in situation iii), the first biometric print is attached to the at least one acquired datum (d1, d2, d3) relating to the recording context, and wherein, in step b1), the first reference print is chosen depending on the at least one acquired datum (d1, d2, d3) relating to the recording context and/or, in step b2), the second reference print is chosen depending on the at least one acquired datum (d1, d2, d3) relating to the recording context.

3. Identification method according to any one of the preceding claims, wherein, when the context database (15) comprises a number of data which is above a predetermined threshold, it is anticipated, in the first comparison step b1), that the first biometric print be chosen from among the at least two biometric prints recorded in step a) depending on the cluster to which said at least one acquired datum (d1, d2, d3) belongs.

4. Identification method according to any one of the preceding claims, wherein, in the acquisition step, it is anticipated that several data (d1, d2, d3) relating to the context and which together form a vector be acquired.

5. Identification method according to one of the preceding claims, wherein said datum (d1, d2, d3) characterizes said occupant (20) or the environment around the motor vehicle (10) or the motor vehicle (10) at the moment at which said at least two biometric prints are recorded.

6. Identification method according to the two preceding claims, wherein the vector relates to the state of the occupant (20) or to the state of the conversation which the occupant (20) is having with an artificial intelligence or to the road taken by the motor vehicle (10) or to the state of traffic or to the motor vehicle (10), and it comprises at least two distinct data (d1, d2, d3).

7. Identification method according to one of the preceding claims, wherein the first biometric print and second biometric print are a voice print and a face print, respectively.

8. Identification method according to the preceding claim, comprising an enriched voice print generation step during which:
- noise which is present in the environment of said occupant (20) and a second biometric print of the occupant (20) is acquired,
- the first reference print is enriched with the acquired noise,
- steps b1) to c) and the acquisition step are implemented in order to enrich the context database (15) and the first print database (13), preferably in the background without calling upon said occupant (20).

9. Identification method according to the preceding claim, wherein the enriched voice print is generated from a first reference print recorded in a nominal passenger compartment, for example during an enrolment phase.

10. Identification method according to one of the preceding claims, wherein the steps a) to c) and the acquisition step are implemented each time that the occupant (20) utters a predetermined key phrase.

11. Motor vehicle (10) comprising at least one seat for accommodating an occupant (20) and means for measuring two biometric prints of distinct types, **characterized in that** it further comprises a computer (30) adapted to implement an identification method according to one of the preceding claims.
